# EUROPEAN PATENT APPLICATION

(11) **EP 3 103 570 A1**
(43) Date of publication of application: **14.12.2016**
(21) Application number: 16173117.9
(22) Date of filing: 06.06.2016
(51) Int. Cl.: B22F 3/105, B22F 7/06, B22F 7/08

(54) **ADDITIVE MANUFACTURING METHODS AND HYBRID ARTICLES USING BRAZEABLE STRUCTURES MADE BY ADDITIVE MANUFACTURING**

(30) Priority: 07.06.2015 US 201514732745
(71) Applicant: General Electric Company, Schenectady, NY 12345 (US)
(72) Inventor: SCHICK, David Edward, Greenville, SC 29615 (US); KOTTILINGAM, Srikanth Chandrudu, Greenville, 29615 (US); CUI, Yan, Greenville, SC 29615 (US); LACY, Benjamin Paul, Greenville, SC 29615 (US)
(74) Representative: Pöpper, Evamaria

(57) **Abstract**

Additive manufacturing methods are disclosed that include iteratively fusing together a plurality of layers of additive material to build a brazeable additive structure (20). The additive material comprises a mixture comprising a base alloy and a second alloy and the second alloy comprises a sufficient amount of melting point depressant to have a lower melting temperature than the base alloy. A hybrid article (1) manufactured by such a method comprising a base structure (30) with a surface (31) and, a brazeable additive structure (20) joined to the surface (31) of the base structure (30). Surface features (32) could be configured in the surface (31) of the base structure (30).

## Description

### BACKGROUND OF THE INVENTION

The subject matter disclosed herein relates to additive manufacturing and, more specifically, to additive manufacturing methods and hybrid articles using brazeable additive structures.

Additive manufacturing processes generally involve the buildup of one or more materials to make a net or near net shape object, in contrast to subtractive manufacturing methods. Though "additive manufacturing" is an industry standard term (ASTM F2792), additive manufacturing encompasses various manufacturing and prototyping techniques known under a variety of names, including freeform fabrication, 3D printing, rapid prototyping/tooling, etc. Additive manufacturing techniques are capable of fabricating complex components from a wide variety of materials. Generally, a freestanding object can be fabricated from a computer aided design (CAD) model. One exemplary additive manufacturing process uses an energy beam, for example, an electron beam or electromagnetic radiation such as a laser beam, to sinter or melt a powder material, creating a solid three-dimensional object in which particles of the powder material are bonded together. Different material systems, for example, engineering plastics, thermoplastic elastomers, metals, and ceramics may be used. Laser sintering or melting is one exemplary additive manufacturing process for rapid fabrication of functional prototypes and tools. Applications can include patterns for investment casting, metal molds for injection molding and die casting, molds and cores for sand casting, and relatively complex components themselves. Fabrication of prototype objects to facilitate communication and testing of concepts during the design cycle are other potential uses of additive manufacturing processes. Likewise, components comprising more complex designs, such as those with internal passages that are less susceptible to other manufacturing techniques including casting or forging, may be fabricated using additive manufacturing methods.

Laser sintering can refer to producing three-dimensional (3D) objects by using a laser beam to sinter or melt a fine powder. Specifically, sintering can entail fusing (agglomerating) particles of a powder at a temperature below the melting point of the powder material, whereas melting can entail fully melting particles of a powder to form a solid homogeneous mass. The physical processes associated with laser sintering or laser melting include heat transfer to a powder material and then either sintering or melting the powder material. Although the laser sintering and melting processes can be applied to a broad range of powder materials, the scientific and technical aspects of the production route, for example, sintering or melting rate, and the effects of processing parameters on the microstructural evolution during the layer manufacturing process can lead to a variety of production considerations. For example, this method of fabrication may be accompanied by multiple modes of heat, mass and momentum transfer, and chemical reactions.

Laser sintering/melting techniques can specifically entail projecting a laser beam onto a controlled amount of powder material (e.g., a powder metal material) on a substrate (e.g., build plate) so as to form a layer of fused particles or molten material thereon. By moving the laser beam relative to the substrate along a predetermined path, often referred to as a scan pattern, the layer can be defined in two dimensions on the substrate (e.g., the "x" and "y" directions), the height or thickness of the layer (e.g., the "z" direction) being determined in part by the laser beam and powder material parameters. Scan patterns can comprise parallel scan lines, also referred to as scan vectors or hatch lines, and the distance between two adjacent scan lines may be referred to as hatch spacing, which may be less than the diameter of the laser beam so as to achieve sufficient overlap to ensure complete sintering or melting of the powder material. Repeating the movement of the laser along all or part of a scan pattern may facilitate further layers of material to be deposited and then sintered or melted, thereby fabricating a three-dimensional object.

For example, laser sintering and melting techniques can include using continuous wave (CW) lasers, such as Nd: YAG lasers operating at or about 1064 nm. Such embodiments may facilitate relatively high material deposition rates particularly suited for repair applications or where a subsequent machining operation is acceptable in order to achieve a finished object. Other laser sintering and melting techniques may alternatively or additionally be utilized such as, for example, pulsed lasers, different types of lasers, different power/wavelength parameters, different powder materials or various scan patterns to facilitate the production of one or more three-dimensional objects. However, these additive manufacturing methods may not always be suitable for high temperature alloys that are potentially susceptible to cracking during welding.

Accordingly, alternative additive manufacturing methods and hybrid articles using brazeable additive structures would be welcome in the art.

### BRIEF DESCRIPTION OF THE INVENTION

In one embodiment, an additive manufacturing method is disclosed. The additive manufacturing method includes iteratively fusing together a plurality of layers of additive material to build a brazeable additive structure. The additive material comprises a mixture comprising a base alloy and a second alloy and the second alloy comprises a sufficient amount of melting point depressant to have a lower melting temperature than the base alloy.

In another embodiment, a brazeable additive structure is disclosed. The brazeable additive structure includes a plurality of layers of additive material fused together, wherein, the additive material comprises a mixture comprising a base alloy and a second alloy, and wherein the second alloy comprises a sufficient amount of melting point depressant to have a lower melting temperature than the base alloy.

In yet another embodiment, a hybrid article is disclosed. The hybrid article includes a base structure comprising a surface and a brazeable additive structure joined to the surface of the base structure. The brazeable additive structure includes a plurality of layers of additive material fused together, wherein, the additive material comprises a mixture comprising a base alloy and a second alloy, and wherein the second alloy comprises a sufficient amount of melting point depressant to have a lower melting temperature than the base alloy.

These and additional features provided by the embodiments discussed herein will be more fully understood in view of the following detailed description, in conjunction with the drawings.

### BRIEF DESCRIPTION OF THE DRAWINGS

The embodiments set forth in the drawings are illustrative and exemplary in nature and not intended to limit the inventions defined by the claims. The following detailed description of the illustrative embodiments can be understood when read in conjunction with the following drawings, where like structure is indicated with like reference numerals and in which:
FIG. 1 is a partial schematic view of a turbomachine including a turbine shroud seal structure according to one or more embodiments shown or described herein;
FIG. 2 illustrates an additive manufacturing method according to one or more embodiments shown or described herein;
FIG. 3 is a perspective view of a base structure potentially amendable to a brazeable additive structure according to one or more embodiments shown or described herein; and,
FIG. 4 is a cross sectional view of a hybrid article comprising a brazeable additive structure joined to a base structure according to one or more embodiments shown or described herein.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

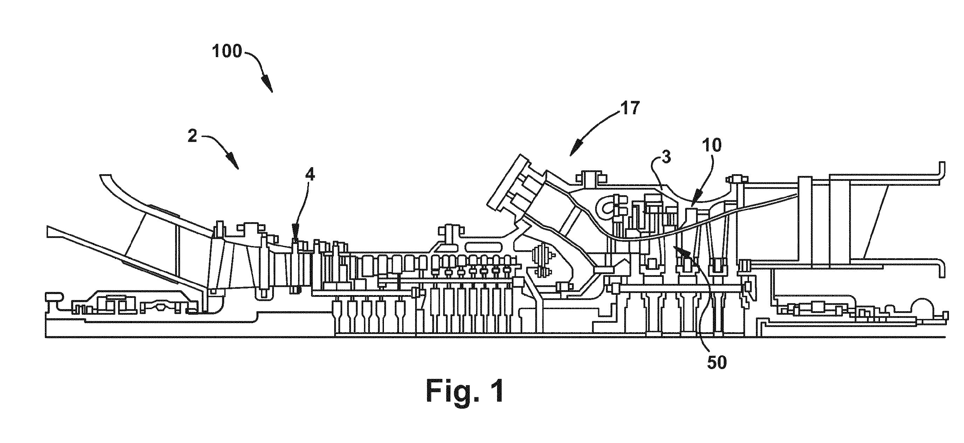

Referring now to FIG. 1, a turbomachine constructed in accordance with an exemplary embodiment is indicated generally at 2. Turbomachine 2 includes a housing 3 within which is arranged a compressor 4. Compressor 4 is linked to a turbine 10 through a common compressor/turbine shaft or rotor. Compressor 4 is also linked to turbine 10 through a plurality of circumferentially spaced combustors, one of which is indicated at 17. In the exemplary embodiment shown, turbine 10 includes first, second and third stages comprising rotary members or wheels having an associated plurality of blade members or buckets. Wheels and buckets in conjunction with corresponding stator vanes or nozzles 50 can further define the various stages of turbine 10. With this arrangement, buckets rotate in close proximity to an inner surface of the housing 3.

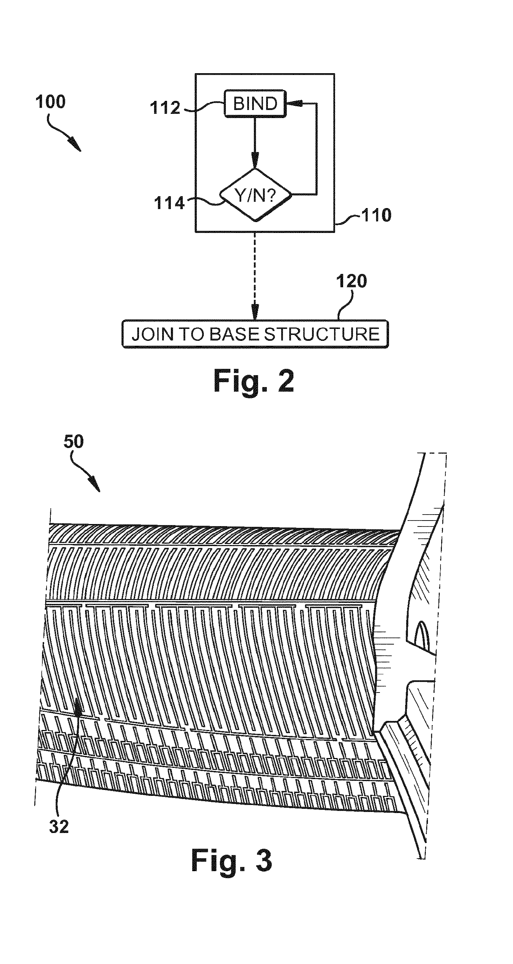

Referring now additionally to FIGS. 2-4, an additive manufacturing method 100 is illustrated. The additive manufacturing method 100 can be utilized with a base structure 30 (such as a nozzle 50) to manufacture a hybrid article 1 that can be incorporated into one or more of the various components of a turbomachine 2. Specifically, the additive manufacturing method 100 and hybrid article 1 can utilize a brazeable additive structure 20 to facilitate the incorporation of high temperature alloys that may otherwise be difficult to weld, braze or utilize.

With specific references to FIGS. 2-4, the additive manufacturing method 100 can generally comprise iteratively fusing together a plurality of layers of additive material in step 110 to build a brazeable additive structure 20. As used herein, "iteratively fusing together a plurality of layers of additive material" and "additive manufacturing" refers to any process which results in a three-dimensional object and includes a step of sequentially forming the shape of the object one layer at a time. For example, as illustrated in FIG. 2, iteratively fusing together a plurality of layers of additive material in step 110 can comprise the individual steps of fusing together an individual layer of additive material in step 112 and determining whether another layer is required in step 114. If the brazeable additive structure 20 requires another layer, than the building process repeats step 112. If the brazeable additive structure 20 does not require another layer, than the additive manufacturing method 100 can be concluded or advance to the next step.

Additive manufacturing processes include, but are not limited to, powder bed additive manufacturing and powder fed additive manufacturing processes such as by using lasers or electron beams for iteratively fusing together the powder material. Additive manufacturing processes can include, for example, three dimensional printing, laser-net-shape manufacturing, direct metal laser sintering (DMLS), direct metal laser melting (DMLM), selective laser sintering (SLS), plasma transferred arc, freeform fabrication, and the like. One exemplary type of additive manufacturing process uses a laser beam to fuse (e.g., sinter or melt) a powder material (e.g., using a powder bed process). Another exemplary type of additive manufacturing can comprise iteratively binding together a plurality of layers of additive material using a binder to produce a green state additively manufactured component, wherein the binder can be subsequently burned off. Additive manufacturing processes can employ powder materials or wire as a raw material. Moreover additive manufacturing processes can generally relate to a rapid way to manufacture an object (article, component, part, product, etc.) where a plurality of thin unit layers are sequentially formed to produce the object. For example, layers of a powder material may be provided (e.g., laid down) and irradiated with an energy beam (e.g., laser beam) so that the particles of the powder material within each layer are sequentially fused (e.g., sintered or melted) to solidify the layer.

The additive material fused together in step 112 can comprise a mixture comprising a base alloy and a second alloy wherein the second alloy comprises a sufficient amount of melting point depressant to have a lower melting temperature than the base alloy. The combination of the base alloy and second alloy can produce a brazeable additive structure 20. Specifically, the second alloy can facilitate the joining of the brazeable additive structure 20 to a base structure 30 by providing a lower melting temperature than the base alloy alone possesses. Moreover, the second alloy can further help infiltrate the brazeable additive structure 20 during brazing operations to reduce or eliminate voids that may otherwise occur if only the base alloy were present.

The base alloy of the additive material can comprise any suitable composition such as one suitable for high temperature applications within a turbomachine 2 (e.g., nozzle 50). In some embodiments, the base alloy may be the same as or similar to the base structure 30 for which the brazeable additive structure 20 will be joined to. For example, in some embodiments, the base alloy can comprise nickel-based superalloys such as MAR-M-247, René N4, René N5, René 108, GTD-111®, GTD-222®, GTD-444®, and IN-738 or cobalt-based superalloys such as MAR-M-509 or FSX-414 as discussed above. In some embodiments, the properties for the base alloy include chemical and metallurgical compatibility with the base structure 30 (e.g., nozzle 50), such as high fatigue strength, low tendency for cracking, oxidation resistance and/or machinability.

In some embodiments, the base alloy may comprise a melting point of within about 25 °C of the melting temperature of the base structure 30 it will be joined to. In some embodiments, the base alloy may comprise a compositional range of, by weight, about 2.5 to 11% cobalt, 7 to 9% chromium, 3.5 to 11% tungsten, 4.5 to 8% aluminum, 2.5 to 6% tantalum, 0.02 to 1.2% titanium, 0.1 to 1.8% hafnium, 0.1 to 0.8% molybdenum, 0.01 to 0.17% carbon, up to 0.08% zirconium, up to 0.60 silicon, up to 2.0 rhenium, the balance being nickel and incidental impurities. In even some embodiments, the base alloy may comprise a compositional range of, by weight, about 9 to 11% cobalt, 8 to 8.8% chromium, 9.5 to 10.5% tungsten, 5.3 to 5.7% aluminum, 2.8 to 2.3% tantalum, 0.9 to 1.2% titanium, 1.2 to 1.6% hafnium, 0.5 to 0.8% molybdenum, 0.13 to 0.17% carbon, 0.03 to 0.08% zirconium, the balance nickel and incidental impurities.

In even some embodiments, the base alloy may comprise MAR-M-247. Such a base alloy may comprise a compositional range of, by weight, about 59% nickel, about 10% tungsten, about 8.25% chromium, about 5.5% aluminum, about 3% tantalum, about 1% titanium, about 0.7% molybdenum, about 0.5% iron and about 0.015% boron. In some embodiments, the base alloy may comprise MAR-M-509. Such a base alloy may comprise a compositional range of, by weight, about 59% cobalt, about 23.5% chromium, about 10% nickel, about 7% tungsten, about 3.5% tantalum, about 0.6% carbon, about 0.5% zirconium and about 0.2% titanium.

It should be appreciated that while specific materials and compositions have been listed herein for the composition of the base alloy of the additive material, these listed materials and compositions are exemplary only and non-limiting and other alloys may alternatively or additionally be used. Furthermore, it should be appreciated that the particular composition of the base alloy for additive material may depend on the composition of the base structure 30 (e.g., nozzle 50).

The second alloy of the additive material may also have a composition similar to the base structure 30 (e.g., nozzle 50) but further contain a melting point depressant to promote sintering of the base alloy and the second alloy particles and enable bonding (e.g., brazing) of the brazeable additive structure 20 to the base structure 30 at temperatures below the melting point of the base structure 30. For example, in some embodiments the melting point depressant can comprise boron, silicon, germanium and/or manganese.

In some embodiments, the second alloy may comprise a melting point of about 25 °C to about 50 °C below the grain growth or incipient melting temperature of the base structure 30. Such embodiments may better preserve the desired microstructure of the base structure 30 and/or the base alloy during a joining process. In some embodiments, the second alloy may comprise commercially available AMS4782. For example, the second alloy may comprise a compositional range of, by weight, about 71% nickel, about 19% chromium and about 10% silicon.

In some embodiments, the second alloy may comprise a compositional range of, by weight, about 9 to 10% cobalt, 11 to 16% chromium, 3 to 4% aluminum, 2.25 to 2.75% tantalum, 1.5 to 3.0% boron, up to 5% silicon, up to 1.0% yttrium, the balance nickel and incidental impurities. For example, in some embodiments the second alloy may comprise commercially available Amdry DF4B nickel brazing alloy.

In even some embodiments, the second alloy may comprise MAR M-509B commercially available from WESGO Ceramics. Such a second alloy may comprise a compositional range of, by weight, about 22.9 to 24.75% chromium, 9.0 to 11.0% nickel, 6.5 to 7.6% tungsten, 3.0 to 4.0% tantalum, 2.6 to 3.16% boron, 0.55 to 0.65% carbon, 0.3 to about 0.6% zirconium, 0.15 to 0.3% titanium, up to 1.3% iron, up to 0.4% silicon, up to 0.1 % manganese, up to 0.02% sulfur and the balance cobalt.

It should also be appreciated that while specific materials and compositions have been listed herein for the composition of the second alloy of the brazeable additive structure 20, these listed materials and compositions are exemplary only and non-limiting and other alloys may alternatively or additionally be used. Furthermore, it should be appreciated that the particular composition of the second alloy for the brazeable additive structure 20 may depend on the composition of the base structure 30.

The additive material fused together to build the brazeable additive structure can comprise any relative amounts of the base alloy and the second alloy that are sufficient to provide enough melting point depressant to ensure wetting and bonding (e.g., diffusion/brazing bonding) of the particles of the base alloy and the second alloy to each other and to the surface 31 of the base structure 30.

For example, in some embodiments the additive material can comprise, by weight, from about 25% to about 75% base alloy and from about 75% to about 25% second alloy. In some embodiments, the additive material can comprise, by weight, from about 40% to about 60% base alloy and from about 60% to about 40% second alloy. In some embodiments, the additive material can comprise, by weight about 50% base alloy and about 50% second alloy. It should be appreciated that while specific relative ranges of the base alloy and the second alloy have been presented herein, these ranges are exemplary only and non-limiting and any other relative compositions may also be realized such that a sufficient amount of melting point depressant is provided as discussed above.

Moreover, a plurality of combinations of base alloy and second alloy may be utilized in the additive material. In some embodiments, the base alloy may comprise commercially available MAR-M-247 and the second alloy may comprise commercially available DF4B. In some embodiments, the base alloy may comprise commercially available MAR-M-247 and the second alloy may comprise commercially available AMS4782. In some embodiments, the base alloy may comprise commercially available MAR-M-509 and the second alloy may comprise MAR-M-509B.

The brazeable additive structure 20 can thereby comprise a variety of shapes and configurations as built in step 110 of the additive manufacturing method 100. For example, in some embodiments, the brazeable additive structure 20 can comprise a contoured profile. In such embodiments, the brazeable additive structure 20 may specifically comprise a contoured profile that substantially matches a profile of the base structure 30 such that the brazeable additive structure 20 and base structure 30 may be joined with limited or no gaps. For example, in such embodiments, the brazeable additive structure 20 may be utilized to close one or more surface features 32 (such as the illustrated microchannels) configured in the surface 31 of the base structure 30. In some embodiments, the brazeable additive structure 20 may comprise one or more other surface features such as channels, passages, tubes, pins, plates, or the like. Such embodiments may provide various complex geometries for one or more parts of the turbomachine 2 such as combustion components or hot gas path components. While specific embodiments of brazeable additive structures 20 have been discussed and illustrated herein, it should be appreciated that these are only intended to be non-limiting examples and additional or alternative embodiments may also be realized. Moreover, in some embodiments, building the brazeable additive structure 20 in step 110 can comprise any supplemental machining to the brazeable additive structure 20 such as to facilitate subsequent joining operations and/or to incorporate one or more surface features 32. In some embodiments, the brazeable additive structure 20 may undergo HIP and/or diffusion heat treatment. Such processes may occur before during and/or after any potential joining of the brazeable additive structure 20 to the base structure 30.

With continued reference to FIG. 2, the additive manufacturing method 100 may optionally further comprise joining the brazeable additive structure 20 to the surface 31 of the base structure 30 to form a hybrid article 1.

The base structure 30 may comprise any type or portion of a component that has a surface 31 for which the brazeable additive structure 20 can be joined thereto. For example, in some embodiments, the base structure 30 may comprise a nozzle 50 as illustrated in FIG. 3. Notable other examples of such base structures 30 include turbine components such as turbine buckets (blades), shrouds, and other hot gas path and combustion components of a turbine, such as an industrial gas or steam turbine or an aircraft gas turbine engine. In some embodiments, the surface 31 of the base structure 30 may comprise one or more surface features 32 such as the illustrated microchannels with the nozzle 50 of FIG. 3.

The base structure 30 can also comprise any metal or alloy substrate suitable for a joining application (e.g., braze or weld) with the brazeable additive structure 20. In some embodiments, the base structure may comprise the same or substantially similar material as the base alloy of the additive material that comprises the brazeable additive structure 10. For example, in some embodiments, the base structure 30 may comprise a nickel, cobalt, or iron based superalloy. The base structure 30 may comprise nickel-based superalloys such as René N4, René N5, René 108, GTD-111®, GTD-222®, GTD-444®, IN-738 and MarM 247 or cobalt-based superalloys such as FSX-414. The base structure 30 may be formed as an equiaxed, directionally solidified (DS), or single crystal (SX) casting to withstand relatively higher temperatures and stresses such as may be present within a gas or steam turbine.

Joining the brazeable additive structure 20 to the base structure 30 in step 130 can occur through any suitable heat application (e.g., brazing or welding). Specifically, joining in step 130 can comprise applying a heat sufficient to at least partially melt the second alloy of the additive material without melting the base alloy. Such embodiments may provide for joining the brazeable additive structure 20 to the base structure 30 without mitigating the properties of the base alloy or reducing the quality of the overall hybrid article 1 (e.g., avoiding cracking or the like). For example, heat applied in step 130 to join the brazeable additive structure 20 to the surface 31 of the base structure 30 can comprise any suitable temperature, heat source, iterations, ramp rate, hold time, cycle and any other relevant parameters to join (e.g., braze, bond or the like) the materials together to form the overall hybrid article 1 by at least partially melting the second alloy. In some embodiments, multiple additive structures 20 may be joined to a base structure 30 in step 130. In some embodiments, an additive structure 20 may be joined to multiple base structures 30 in step 130. In some embodiments, multiple additive structures 20 may be joined to multiple base structures 30 in step 130.

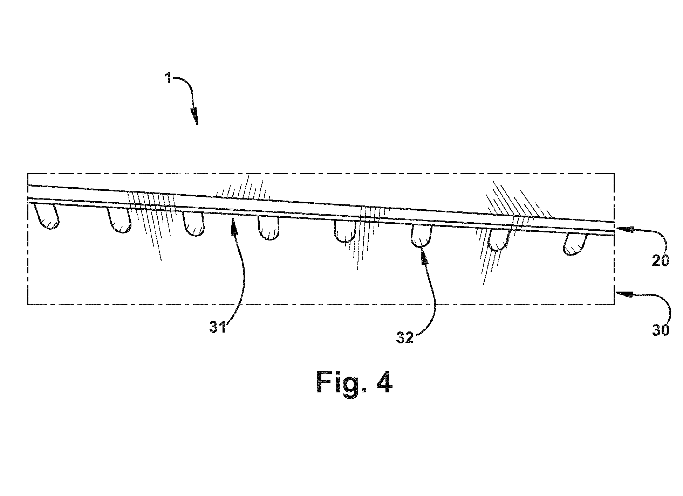

Referring now specifically to FIG. 4, as a result of joining the brazeable additive structure 20 to the surface 31 of the base structure 30 in the additive manufacturing method 100, a hybrid article 1 can be produced. The hybrid article 1 can comprise a variety of different turbine components such as those comprising near-surface microchannels. For example, the hybrid article 1 may comprise turbine buckets (blades), nozzles (vanes), shrouds, and other hot gas path and combustion components of the turbomachine 2. The brazeable aspect to the brazeable additive structure 20 can facilitate the joining (e.g., brazing) of high melting temperature materials to a base structure without cracking. Moreover, the brazeable additive structure 20 can be contoured to the base structure 30 and comprise similar or different materials based on the potential application of the hybrid article 1.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

For completeness, various aspects of the invention are now set out in the following clauses:
1. An additive manufacturing method comprising:
   iteratively fusing together a plurality of layers of additive material to build a brazeable additive structure;
   wherein, the additive material comprises a mixture comprising a base alloy and a second alloy; and,
   wherein the second alloy comprises a sufficient amount of melting point depressant to have a lower melting temperature than the base alloy.
2. The additive manufacturing method of claim 1, further comprising joining the brazeable additive structure to a surface of a base structure to form a hybrid article.
3. The additive manufacturing method of claim 2, wherein joining comprises applying a heat sufficient to at least partially melt the second alloy without melting the base alloy.
4. The additive manufacturing method of claim 2, wherein the surface of the base structure comprises one or more surface features, and wherein the brazeable additive structure at least partially encloses the one or more surface features when joined to the base structure.
5. The additive manufacturing method of claim 1, wherein the brazeable additive structure comprises a contoured profile that substantially matches a surface profile of the base structure.
6. The additive manufacturing method of claim 1, wherein the base alloy comprises a nickel, cobalt or iron based superalloy.
7. The additive manufacturing method of claim 1, wherein the second alloy comprises a melting point depressant comprising boron, silicon, germanium and/or manganese.
8. The additive manufacturing method of claim 1, wherein the additive material comprises, by weight, from about 25 percent to about 75 percent base alloy and from about 75 percent to about 25 percent second alloy.
9. A brazeable additive structure comprising:
   a plurality of layers of additive material fused together;
   wherein, the additive material comprises a mixture comprising a base alloy and a second alloy; and,
   wherein the second alloy comprises a sufficient amount of melting point depressant to have a lower melting temperature than the base alloy.
10. The brazeable additive structure of claim 9, wherein the base alloy comprises a nickel, cobalt or iron based superalloy.
11. The brazeable additive structure of claim 9, wherein the second alloy comprises a melting point depressant comprising boron, silicon, germanium and/or manganese.
12. The brazeable additive structure of claim 9, wherein the additive material comprises, by weight, from about 25 percent to about 75 percent base alloy and from about 75 percent to about 25 percent second alloy.
13. The brazeable additive structure of claim 9, wherein the brazeable additive structure comprises a contoured profile.
14. The brazeable additive structure of claim 9, wherein the brazeable additive structure comprises one or more surface features.
15. A hybrid article comprising:
   a base structure comprising a surface; and,
   a brazeable additive structure joined to the surface of the base structure, the brazeable additive structure comprising a plurality of layers of additive material fused together, wherein, the additive material comprises a mixture comprising a base alloy and a second alloy, and wherein the second alloy comprises a sufficient amount of melting point depressant to have a lower melting temperature than the base alloy.
16. The hybrid article of claim 15, wherein the base alloy of the additive material comprises a nickel, cobalt or iron based superalloy.
17. The hybrid article of claim 15, wherein the surface of the base structure comprises one or more surface features.
18. The hybrid article of claim 17, wherein the brazeable additive structure at least partially encloses the one or more surface features when joined to the base structure.
19. The hybrid article of claim 15, wherein the brazeable additive structure comprises a contoured profile that substantially matches a surface profile of the base structure.
20. The hybrid article of claim 15, wherein the hybrid article comprises a turbine component.

## Claims

1. An additive manufacturing method comprising:
iteratively fusing together a plurality of layers of additive material to build a brazeable additive structure (20);
wherein, the additive material comprises a mixture comprising a base alloy and a second alloy; and,
wherein the second alloy comprises a sufficient amount of melting point depressant to have a lower melting temperature than the base alloy.

2. The additive manufacturing method of claim 1, further comprising joining the brazeable additive structure to a surface (31) of a base structure (30) to form a hybrid article (1).

3. The additive manufacturing method of claim 2, wherein joining comprises applying a heat sufficient to at least partially melt the second alloy without melting the base alloy.

4. The additive manufacturing method of claim 2, wherein the surface (31) of the base structure (30) comprises one or more surface features (32), and wherein the brazeable additive structure (20) at least partially encloses the one or more surface features (32) when joined to the base structure (30).

5. The additive manufacturing method of claim 1, wherein the brazeable additive structure (20) comprises a contoured profile that substantially matches a surface profile of the base structure (30).

6. The additive manufacturing method of claim 1, wherein the base alloy comprises a nickel, cobalt or iron based superalloy and wherein the second alloy comprises a melting point depressant comprising boron, silicon, germanium and/or manganese.

7. The additive manufacturing method of claim 1, wherein the additive material comprises, by weight, from about 25 percent to about 75 percent base alloy and from about 75 percent to about 25 percent second alloy.

8. A brazeable additive structure (20) comprising:
a plurality of layers of additive material fused together;
wherein, the additive material comprises a mixture comprising a base alloy and a second alloy; and,
wherein the second alloy comprises a sufficient amount of melting point depressant to have a lower melting temperature than the base alloy.

9. The brazeable additive structure (20) of claim 8, wherein the base alloy comprises a nickel, cobalt or iron based superalloy and wherein the second alloy comprises a melting point depressant comprising boron, silicon, germanium and/or manganese.

10. The brazeable additive structure (20) of claim 8, wherein the additive material comprises, by weight, from about 25 percent to about 75 percent base alloy and from about 75 percent to about 25 percent second alloy.

11. The brazeable additive structure (20) of claim 8, wherein the brazeable additive structure comprises a contoured profile.

12. The brazeable additive structure (20) of claim 8, wherein the brazeable additive structure comprises one or more surface features.

13. A hybrid article (1) comprising:
a base structure (30) comprising a surface (31); and,
a brazeable additive structure (20) joined to the surface (31) of the base structure (30), the brazeable additive structure (20) comprising a plurality of layers of additive material fused together, wherein, the additive material comprises a mixture comprising a base alloy and a second alloy, and wherein the second alloy comprises a sufficient amount of melting point depressant to have a lower melting temperature than the base alloy.

14. The hybrid article (1) of claim 13, wherein the base alloy of the additive material comprises a nickel, cobalt or iron based superalloy.

15. The hybrid article (1) of claim 13, wherein the surface (31) of the base structure (30) comprises one or more surface features (32) and wherein the brazeable additive structure (20) at least partially encloses the one or more surface features (32) when joined to the base structure (30).
